# EUROPEAN PATENT APPLICATION

(11) **EP 4 813 668 A1**
(43) Date of publication of application: **30.09.2026**
(21) Application number: 26156648.3
(22) Date of filing: 05.02.2026
(51) Int. Cl.: B60B 19/10, B60B 21/12, F16D 55/36, F16D 65/84

(54) **WHEEL KEY CAPS**

(30) Priority: 28.02.2025 US 202519066895
(71) Applicant: Honeywell International Inc., Charlotte, NC 28202 (US)
(72) Inventor: PARSONS, Abigail, Charlotte, 28202 (US); REGNIER, Thomas, Charlotte, 28202 (US); ULBRICHT, Thomas, Charlotte, 28202 (US); MURDIE, Neil, Charlotte, 28202 (US); MEHR, Mehrad, Charlotte, 28202 (US); BEEHLER, Jonathan T., Charlotte, 28202 (US)
(74) Representative: Haseltine Lake Kempner LLP

(57) **Abstract**

A wheel key cap (12) may include an elongated cap body (18) defining a channel (20) extending along a longitudinal axis, the channel (20) defining a channel surface. The wheel key cap (12) may further include a low thermal conductivity layer (16) over at least a portion of the channel surface. The elongated cap body (18) may be configured to receive a key boss (14) in the channel (20) such that the low thermal conductivity layer (16) is between at least a portion of the wheel key cap (12) and the key boss (14). The low thermal conductivity layer (16) may have a thermal conductivity less than about 10 W·m⁻¹·K⁻¹. A wheel assembly (10) may include a wheel defining a key boss (14), and the wheel key cap (12) receiving the key boss (14). The low thermal conductivity layer (16) may include a coating or a liner.

## Description

### TECHNICAL FIELD

The present disclosure relates to wheel assemblies, and to wheel key caps and key bosses of wheel assemblies.

### BACKGROUND

Vehicles, such as aircrafts, may use a wheel brake system that includes a multi-disc brake assembly. For example, the multi-disc brake assembly may include a plurality of rotors engaged with a wheel and a plurality of stators interleaved with the rotors. The rotors and wheel are configured to rotate around an axle, while the stators remain rotationally stationary. To decelerate rotational motion of a rotating wheel, the brake assembly may displace pistons against a pressure plate to squeeze the rotating rotors attached to the wheel against the stationary stators, therefore producing torque that decelerates the rotational motion of the wheel. This process generates heat within the rotors and the stators.

Wheel assemblies in operation may be exposed to heat. For example, braking assemblies may generate heat in course of operation, for example, arising from friction. Further, brakes may remain at elevated temperatures and require significant time to cool after landing.

### SUMMARY

In general, the disclosure describes wheel assemblies, and wheel key caps and key bosses of wheel assemblies.

Wheel assemblies may include key bosses against which brake rotors are loaded in course of braking. Wheel key caps are fit around key bosses to protect the key bosses from wear. Transfer of heat generated by brake rotors to a wheel may affect the integrity of a wheel and wheel components (e.g., key bosses). In some examples, a low thermal conductivity layer (for example, a coating) or a low thermal conductivity layer liner may be positioned between a key boss and a wheel key cap to resist heat transfer from rotors to the wheel through the key boss, and promote the integrity of the wheel.

In examples, an example wheel key cap includes an elongated cap body defining a channel extending along a longitudinal axis, the channel defining a channel surface. The wheel key cap may further include a low thermal conductivity layer over at least a portion of the channel surface. The elongated cap body may be configured to receive a key boss in the channel such that the low thermal conductivity layer is between at least a portion of the wheel key cap and the key boss. The low thermal conductivity layer may have a thermal conductivity less than about 10 W·m⁻¹·K⁻¹.

In examples, an example wheel assembly includes a wheel defining a key boss. The wheel assembly may further include a wheel key cap including an elongated cap body, the elongated cap body defining a channel extending along a longitudinal axis. The wheel assembly may further include a low thermal conductivity liner within the channel and between at least a portion of the wheel key cap and the key boss. The low thermal conductivity liner may have a thermal conductivity less than about 10 W·m⁻¹·K⁻¹.

The details of one or more examples are set forth in the accompanying drawings and the description below. Other features, objects, and advantages will be apparent from the description and drawings, and from the claims.

### BRIEF DESCRIPTION OF THE FIGURES

FIG. 1A is a partial perspective view illustrating an example wheel assembly including a wheel key cap and a key boss, with a low thermal conductivity layer between the wheel key cap and the key boss.
FIG. 1B is a cross-sectional view of the wheel assembly of FIG. 1A.
FIG. 2 is a cross-sectional view illustrating an example wheel assembly including a wheel key cap, a key boss, an anti-corrosion layer, and a low thermal conductivity layer between the wheel key cap and key boss 14.
FIG. 3 is a cross-sectional view of an example wheel assembly including a wheel key cap, a key boss, and a low thermal conductivity liner between the wheel key cap and the key boss.
FIG. 4 is a perspective view illustrating an example wheel including a plurality of key bosses on an interior surface of the wheel.
FIG. 5 is a schematic cross-sectional view of an example wheel and brake assembly including the wheel of FIG. 4.

### DETAILED DESCRIPTION

In general, the disclosure describes wheel assemblies, and wheel key caps and key bosses of wheel assemblies.

Transportation vehicles (e.g., aircraft) include brake assemblies that engage with wheels to cause braking. During braking, torque is transmitted between a wheel and brake rotors. To facilitate transmission of torque, key bosses (e.g., aluminum bosses) may be integrated into the forging of an inner diameter of a wheel barrel, so that rotors can engage against the bosses. The key bosses (also referred to as bosses) may be protected from wear by wheel key caps (also referred to as key caps) fit over the bosses, so that the rotors contact the wheel key caps rather than directly contacting the bosses. For example, in case of steel brake rotors and aluminum bosses, a metal wheel key cap (e.g., a steel key cap) may be snugly fit around a boss to protect the boss from wear as steel spiders of the rotors are loaded against the wheel.

While such an approach may benefit a dynamic performance of a wheel, carbon-carbon composite brakes may generate even more elevated temperatures. Such elevated temperatures may affect the integrity of key bosses that are integrated with a wheel. Certain carbon-carbon composite brakes utilize a torque key, which is a separate part with superior high temperature strength properties when compared to aluminum. However, torque keys create a less stiff assembly compared to a wheel with an integrated boss, and may exhibit less dynamic stability compared to integrated bosses.

In examples according to the present disclosure, brake assemblies may include a low thermal conductivity (low-k) interface material (e.g., a low thermal conductivity layer or liner) positioned in a thermal path between the rotor and the wheel. The low thermal conductivity interface material may have a thermal conductivity less than about 10 W·m⁻¹·K⁻¹, which is sufficiently low to resist heat transfer to bosses to promote the integrity of the bosses, even in case of elevated brake temperatures such as those associated with carbon-carbon composite brakes.

For example, heat transferred from a carbon-carbon composite rotor (or any other type of rotor) to wheel (or a component of the wheel, e.g., an integrated boss) is reduced by the low thermal conductivity interface material. Thus, instead of torque keys, relatively stiffer, boss/key-cap torque transmission feature may be used by using bosses that are integrated with wheels, that are thermally protected by the low thermal conductivity interface material.

In some examples, the low thermal conductivity interface material may include a ceramic. A ceramic directly applied to moving parts (e.g., to a rotor) may wear relatively rapidly and not exhibit sufficient load transmission, because of brittleness of the ceramic, affected by impact when load is transmitted between a rotor and a wheel. However, positioning the low thermal conductivity interface material (including ceramic or another brittle material) between a key cap and a boss keeps the low thermal conductivity interface material shielded and protected by the key cap (e.g., which may include relatively strong materials such as steel) from direct impact or wear from the rotor sliding along the boss during its life.

Moreover, using the low thermal conductivity interface material may allow using integrated boss/wheel torque transmission design even with rotors that exhibit significantly high temperatures, which promotes the dynamic stability of wheels and brakes. Improved dynamic stability lessens the possibility of a vibrational mode that may affect integrity of brakes or other components such as axles or landing gear. Further, the functionality of the brake is not substantially affected. Additionally, because the low thermal conductivity interface material may permit use of higher-temperature rotor materials such as carbon in brake stacks, such materials may facilitate energy absorption during braking. Overall, the wheel assembly and/or the brake assembly including the low thermal conductivity interface material to shield a wheel may have a relative reduced weight, a relative longer life product compared to assemblies that do not include such low thermal conductivity interface material.

For example, the low thermal conductivity material may be applied as a low thermal conductivity layer (e.g., a barrier coating) onto a key cap, or onto a boss of a wheel. The key cap would then be snugly attached over the boss. The low thermal conductivity layer may reduce the heat transfer from the key cap to the boss (or through the boss to the wheel), reducing the boss temperature during a braking activity (e.g., when a vehicle is stopped and/or parked).

In some examples, the low thermal conductivity material may include a low thermal conductivity liner (e.g., a discrete liner, or a slat) that may be snugly sandwiched between a key cap and a boss. In cases where the boss includes a material that has greater thermal expansion (e.g., aluminum) than a material of the key cap (e.g., steel) the greater thermal expansion of the boss may ultimately result in compression being applied to the low thermal conductivity liner. In examples in which the low thermal conductivity liner includes a ceramic, the compression may prevent cracking due to thermal expansion mismatch. Such an approach may allow for a relatively thicker piece of low thermal conductivity material compared to applying a relatively low thermal conductivity material as a coating.

Regardless of the particular manner in which low thermal conductivity material is applied, a rotor would be loaded against the key cap during torque transmission (and not against the low thermal conductivity material), and thus the low thermal conductivity material may be protected from direct impact, wear, or loading.

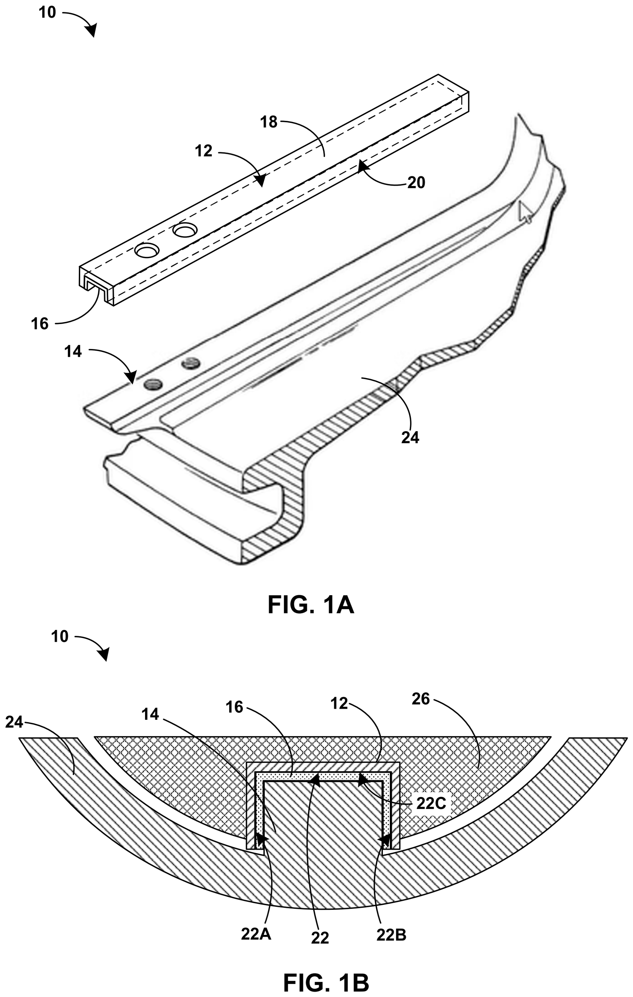

FIG. 1A is a partial perspective view illustrating an example wheel assembly 10 including a wheel key cap 12 and a key boss 14, with a low thermal conductivity layer 16 between wheel key cap 12 and key boss 14. FIG. 1B is a cross-sectional view of wheel assembly 10 of FIG. 1A.

Wheel key cap 12 includes an elongated cap body 18 defining a channel 20 extending along a longitudinal axis, the channel 20 defining a channel surface 22. Wheel key cap includes low thermal conductivity layer 16 over at least a portion of channel surface 22. Elongated cap body 18 may be configured to receive key boss 14 in channel 20.

Key boss 14 may be secured to or defined by a wheel 24. Wheel assembly 10 further includes a rotor 26 configured to engage against key boss 14 to transfer torque to key boss 14, and ultimately result in braking of wheel 24 of wheel assembly 10. Key boss 14 may include any suitable material, for example, a metal or an alloy. In some examples, key boss 14 includes aluminum. Rotor 26 may include any suitable material, for example, a metal, an alloy, a ceramic, or a composite. In some examples, rotor 26 includes a carbon-carbon composite. Contact and torque transfer between rotor 26 and key boss 14 may tend to result in wear of key boss 14. For example, key boss 14 may include a material (e.g., aluminum) that is relatively softer than a material of rotor 26 (e.g., steel or carbon-carbon composite). Wheel key cap 12 may protect key boss 14 from such wear.

In some examples, key boss 14 integrally or continuously extends from wheel 24. However, wheel 24 may include a material similar to or different than that of key boss 14. For example, wheel 24 may include steel while key boss 14 includes aluminum, with the key boss 14 smoothly or continuously extending from wheel 24. Key boss 14 may be forged on wheel 24 or otherwise welded or continuously machined with or joined to wheel 24.

In course of braking, rotor 26 may generate heat that tends to get transferred to wheel 24 (or to a component of wheel 24, e.g., key boss 14). In some examples, the heat generated may tend to affect an integrity of key boss 14. Thus, even though wheel key cap 12 shields key boss 14 from mechanical wear, key boss 14 may be susceptible to thermal deformation resulting from heat transfer. Low thermal conductivity layer 16 is configured to resist such heat transfer from rotor 26 to key boss 14 (or otherwise to wheel 4). For example, elongated cap body 18 of wheel key cap 12 may be configured to receive key boss 14 in channel 20 such that low thermal conductivity layer 16 is between at least a portion of wheel key cap 12 and key boss 14. Low thermal conductivity layer 16 may resist heat transfer from rotor 26 to key boss 14, and thus promote the integrity of key boss 14 (or of wheel 24) even after repeated thermal cycles generated by braking activity in operation of wheel assembly 10. Thus, low thermal conductivity layer 16 may be configured to shield key boss 14 from heat generated by rotor 26.

Low thermal conductivity layer 16 may have a thermal conductivity that is sufficiently low to shield wheel 24 (or a component of wheel 24, e.g., key boss 14) from heat transfer that may cause thermal deformation during a braking event. For example, low thermal conductivity layer 16 may have a thermal conductivity less than about 10 W·m⁻¹·K⁻¹. Such a thermal conductivity may be sufficient to promote the integrity of wheel 24 and resist thermal distortion. For example, the thermal conductivity of low thermal conductivity layer 16 may be sufficiently low to avoid a temperature of wheel 24 (or of a portion or a component of wheel 24) from increasing beyond 150 °C, 160 °C, 170 °C, 180 °C, 190 °C, or 200 °C. In some examples, low thermal conductivity layer 16 has a thermal conductivity of less than about 8 W·m⁻¹·K⁻¹, less than about 6 W·m⁻¹·K⁻¹, less than about 4 W·m⁻¹·K⁻¹, less than about 2 W·m⁻¹·K⁻¹, or less than about 1 W·m⁻¹·K⁻¹.

Low thermal conductivity layer 16 may include any suitable material having a low thermal conductivity (e.g., less than about 10 W·m⁻¹·K⁻¹). In some examples, low thermal conductivity layer 16 includes at least one metal, alloy, or a ceramic. In some examples, low thermal conductivity layer 16 includes, consists of, or consists essentially of a ceramic. The ceramic may be a porous ceramic. For example, the at least one ceramic may include one or more of a porous steatite, a porous zirconia, a porous cordierite, a porous fosterite, a porous anorthite, a porous mullite, a porous yttria silicate, a porous scheelite, or a silica aerogel, or any other low conductivity ceramic. In some examples, the porous zirconia includes a porous yttria-stabilized zirconia.

In some examples, low thermal conductivity layer 16 includes a high-entropy material, for example, a high-entropy ceramic or alloy. For example, low thermal conductivity layer 16 may include a high-entropy boride ceramic, a high-entropy metal diboride ceramic, a high-entropy carbide ceramic, or a high-entropy zirconate.

While ceramic (or generally low thermal conductivity layer 16 including any other material) may tend to exhibit wear, positioning low thermal conductivity layer 16 between wheel key cap 12 and key boss 14 may shield low thermal conductivity layer 16 from mechanical contact with rotor 26. For example, wheel key cap 12 may be positioned between rotor 26 and low thermal conductivity layer 16 (while low thermal conductivity layer 16 continues to thermally shield key boss 14 from rotor 26).

In the example shown in FIGS. 1A and FIG. 1B, low thermal conductivity layer 16 is applied to wheel key cap 12. However, in other examples, low thermal conductivity layer 16 may be additionally or alternatively applied to other components of wheel assembly 10, for example, to key boss 14. For example, low thermal conductivity layer 16 may be applied to a portion of key boss 14 configured to contact key cap 12, or otherwise engage with rotor 26 or receive heat transfer from rotor 26.

Low thermal conductivity layer 16 may be applied to any portion of channel surface 22 of channel 20. In some examples, channel surface 22 includes a first channel face 22A, a second channel face 22B opposing the first channel face, and a third channel face 22C between the first channel face and the second channel face. In some such examples, low thermal conductivity layer 16 includes a coating deposited on at least first channel face 22A and second channel face 22B. In some such examples, third channel face 22C is free of the coating. In other examples, the coating is also deposited on third channel face 22C.

Low thermal conductivity layer 16 may be applied to channel 20 or any suitable portion of wheel key cap 12 (or to another component such as key boss 14) by any suitable technique of depositing low thermal conductivity layer 16. In some examples, a precursor slurry may be applied to a target surface by one or more of coating, spraying, brushing, dipping, or masking, and the precursor slurry may be dried, heated, cured, or otherwise transformed to low thermal conductivity layer 16. In some examples, the precursor slurry includes a suspension of particles (e.g., ceramic particles) in a carrier (e.g., an aqueous carrier such as water, an inorganic carrier, or an organic carrier, or a carrier including one or more of water, an organic solvent, or an inorganic solvent).

Low thermal conductivity layer 16 may have any suitable thickness. For example, the thickness may be sufficiently high to resist heat transfer to key boss 14 and protect key boss 14 from thermal deformation. At the same time, the thickness may be sufficiently low to promote integrity of low thermal conductivity layer 16 (for example, by reducing a tendency to crack) and/or provide a snug fit between wheel key cap 12 and key boss 14. In some examples, low thermal conductivity layer 16 has a thickness that is at least 1%, at least 2%, at least 5%, at least 10%, at least 20%, at least 30%, at least 40%, or at least 50% of a thickness of elongated cap body 18. In some examples, low thermal conductivity layer 16 has a thickness that is no more than 200%, no more than 100%, no more than 80%, no more than 60%, no more than 50%, no more than 40%, no more than 30%, no more than 20%, no more than 10%, or no more than 5% of a thickness of elongated cap body 18. In some examples, low thermal conductivity layer 16 has a thickness in a range of 10% to 50% of a thickness of the elongated cap body. The thickness of low thermal conductivity layer 16 may be uniform or constant along a portion of or an entirety of wheel key cap 12 or key boss 14. In other examples, the thickness of low thermal conductivity layer 16 may vary along a portion of or an entirety of wheel key cap 12 or key boss 14, for example, in a radial direction of wheel assembly 10.

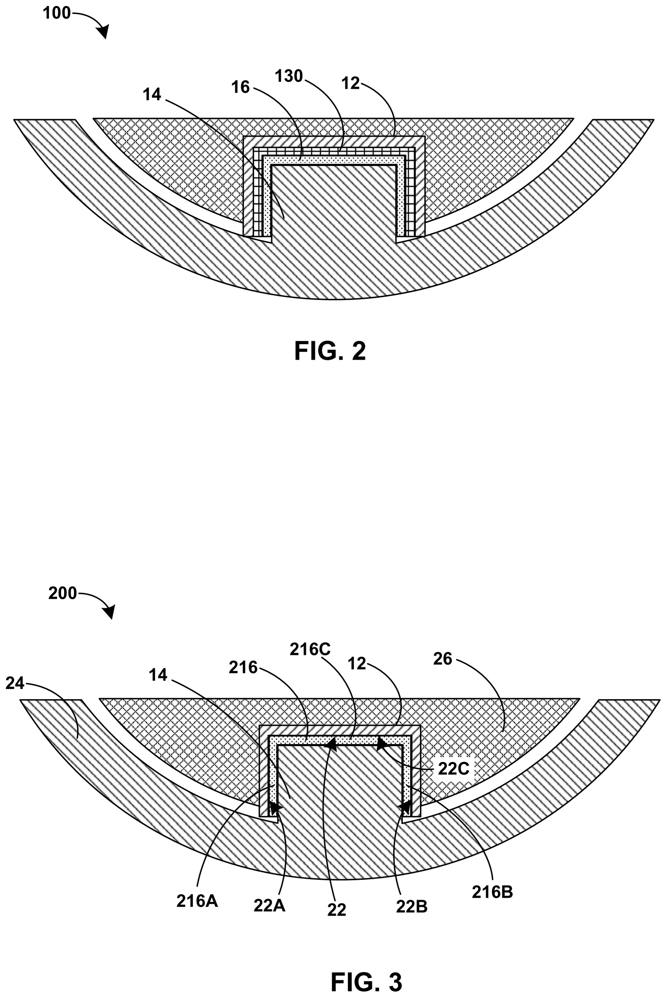

FIG. 2 is a cross-sectional view illustrating an example wheel assembly 100 including wheel key cap 12, key boss 14, an anti-corrosion layer 130, and low thermal conductivity layer 16 between wheel key cap 12 and key boss 14. Wheel assembly 100 is generally similar to wheel assembly 10 except for differences described with reference to FIG. 2.

Anti-corrosion layer 130 may include any suitable material configured to resist corrosion of one or both of wheel key cap 12 or raised boss 14. For example, anti-corrosion layer 130 may include a metal or an alloy. In some examples, the alloy may include a corrosion-resistant stainless steel. For example, the stainless steel may include steel type 301, steel type 302, or steel style 304. In some examples, anti-corrosion layer 130 includes a sheet metal.

Any suitable arrangement of low thermal conductivity layer 16 and anti-corrosion layer 130 may be used. In some examples, low thermal conductivity layer 16 is applied to anti-corrosion layer 130. For example, low thermal conductivity layer 16 may be between anti-corrosion layer 130 and key boss 14 (as shown in FIG. 2). Thus, anti-corrosion layer 130 may be applied to wheel key cap 12, and low thermal conductivity layer 16 may be applied to anti-corrosion layer 130. In some examples, low thermal conductivity layer 16 is between wheel key cap 12 and anti-corrosion layer 130. In other examples, anti-corrosion layer 130 may be between low thermal conductivity layer 16 and key boss 14. For example, low thermal conductivity layer 16 may be applied to wheel key cap 12, and anti-corrosion layer 130 may be applied to low thermal conductivity layer 16.

FIG. 3 is a cross-sectional view of an example wheel assembly 200 including wheel key cap 12, key boss 14, and a low thermal conductivity liner 216 between wheel key cap 12 and key boss 14. Wheel assembly 200 is generally similar to wheel assembly 10 or wheel assembly 100 except for differences described with reference to FIG. 3. In particular, low thermal conductivity liner 216 may have a composition, size, shape, and geometry generally similar to low thermal conductivity layer16, but formed as a discrete liner instead of a coating or a layer. For example, instead of being deposited as a coating on a component of wheel assembly 200, low thermal conductivity liner 216 may be separately formed as a discrete liner, and then assembled with other components of wheel assembly 200.

Thus, wheel assembly 200 may include wheel 24 defining key boss 14. Wheel assembly 200 may further include wheel key cap 12 including an elongated cap body (similar to elongated cap body 18), the elongated cap body defining a channel extending along a longitudinal axis (similar to channel 20). Wheel assembly 200 may further include low thermal conductivity liner 216 within the channel and between at least a portion of wheel key cap 12 and key boss 14. Low thermal conductivity liner 216 may have any suitable shape or size. In some examples, low thermal conductivity liner 216 conforms to the channel of elongated cap body 18.

Low thermal conductivity liner 216 may have a thermal conductivity similar to that described with respect to low thermal conductivity layer 16, for example, less than about 10 W·m⁻¹·K⁻¹. Low thermal conductivity liner 216 may have a composition similar to that described with respect to low thermal conductivity layer 16. For example, low thermal conductivity liner 216 may include a ceramic or another suitable material. Low thermal conductivity liner 216 may have any suitable thickness, for example, a thickness similar to that described with low thermal conductivity liner 16. In some examples, low thermal conductivity liner 216 may have a thickness that is greater than that of low thermal conductivity liner 16 applied as a coating. For example, the greater thickness of low thermal conductivity liner 216 may provide greater structural stability and permit independent handling of low thermal conductivity liner 216 that is separately formed from other components of wheel assembly 200, and provide stability to low thermal conductivity liner 216 during securing low thermal conductivity liner 216 to wheel assembly 200.

Low thermal conductivity liner 216 may include one or more liner portions. For example, the liner portions may be integral with each other, or may be spaced from other each. The liner portions may be continuous or discontinuous. In some examples, low thermal conductivity liner 216 includes a first liner portion 216A facing (e.g., contacting) first channel face 22A and a second liner portion 216B facing (e.g., contacting) second channel face 22B. In some examples, low thermal conductivity liner 216 further includes a third liner portion 216C facing third channel face 22C. For example, first liner portion 216A, second liner portion 216B, and third liner portion 216C may be integral (unitary). In other examples, first liner portion 216A, second liner portion 216B, and third liner portion 216C may be spaced from each other. In some examples, third liner portion 216C may be absent, and low thermal conductivity liner 216 may only include first liner portion 216A and second liner portion 216B opposing each other across key boss 14.

Low thermal conductivity liner 216 may be secured to one or more components of wheel assembly 200. For example, a bolt or screw configured to secure wheel key cap 12 to raised boss 14 may also pass through an opening of low thermal conductivity liner 216. In other examples, low thermal conductivity liner 216 is retained between two components of wheel assembly 200 (e.g., between wheel key cap 12 to raised boss 14 by compression or friction fit). In some examples, low thermal conductivity liner 216 is secured to one or both of wheel key cap 12 or raised boss 14, for example, by a fastener or a high-temperature adhesive.

Wheel assembly 200 may further include an anti-corrosion layer between key boss 14 and wheel key cap 12, for example, similar to anti-corrosion layer 130. In some examples, the anti-corrosion layer is between low thermal conductivity liner 216 and wheel key cap 12.

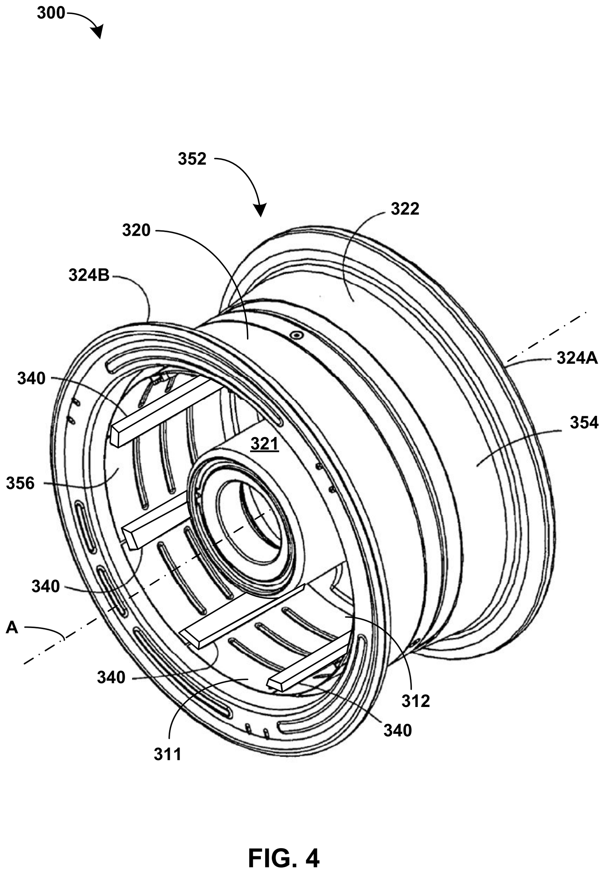

FIG. 4 is a perspective view of an example wheel 300 including a plurality of key bosses 340 on an interior surface 356 of wheel 300. Wheel 300 is an example of wheel 24 described with reference to FIGS. 1A to 3. In some examples, wheel 300 is a part of an aircraft vehicle. In other examples, wheel 300 may be a part of any other vehicle, such as, for example, any marine vessel, land vehicle, or other vehicle. Wheel 300 may include a rim 352 defining an exterior surface 354 and interior surface 356. Rim 352 may include inboard tubewell 320, wheel hub 321, and outboard tubewell 322. In some examples, interior surface 356 may include an inner diameter of inboard tubewell 320. For example, in some cases, interior surface 356 may be referred to as an inner diameter surface of wheel 300.

In some examples, a tire (not shown) may be mounted on exterior surface 354 of rim 352. For example, wheel 300 may include an inboard bead seat 324B and an outboard bead seat 324A configured to retain a tire on exterior surface 354 of rim 352 (e.g., on at least a portion of inboard tubewell 320 and outboard tubewell 322).

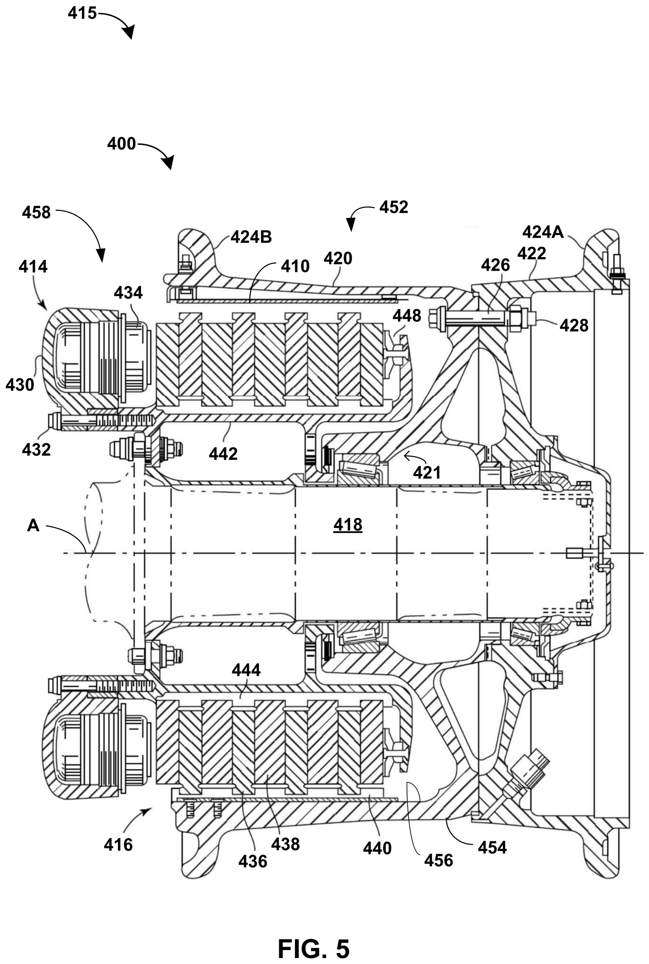

Wheel 300 is configured to engage with one or more rotors (not shown in FIG. 4) of a braking assembly. For example, as shown in the example of FIG. 3, a plurality of key bosses 340 extend from interior surface 356, and each key boss of the plurality of key bosses 340 may be configured to engage with one or more rotors of a brake disc stack of a braking assembly. An example braking assembly is described in more detail with respect to FIG. 5.

The plurality of key bosses 340 extending in the substantially axial direction may enable wheel 300 to slide onto a braking assembly. For example, a plurality of rotors of a braking assembly may include drive slots configured to receive the plurality of key bosses 340, enabling the plurality of key bosses 340 to be slid into respective drive slots of the plurality of rotors. In other examples, one or more key bosses of the plurality of key bosses 340 may be oriented in a different direction and/or may engage with one or more rotors in a different manner.

As illustrated in the example of FIG. 4, in some examples, the plurality of key bosses 340 may be mounted at substantially equal circumferential distances around interior surface 356 of wheel 300. In other examples, one or more of the plurality of key bosses 340 may be mounted a different circumferential distance from an adjacent key boss than at least one other key boss. Here and elsewhere, circumferential distance means the length of an arc on the interior surface 356 of wheel 300 where the arc is in a plane perpendicular to the substantially axial direction of wheel 300. Key bosses 340 may be integrally formed with inboard tubewell 320 or may be separate from and mechanically affixed to inboard tubewell 320.

FIG. 5 is a schematic cross-sectional view of an example wheel and brake assembly 415 including a wheel 400 and a braking assembly 458. Wheel and brake assembly 415 is shown and described to provide context to the example wheel key caps, low thermal conductivity layers, and low thermal conductivity liners described in the present disclosure. The wheel key caps, low thermal conductivity layers, and low thermal conductivity liners described in the present disclosure, however, may be used with any suitable wheel and brake assembly in other examples.

Wheel 400 includes inboard tubewell 420, wheel hub 421, outboard tubewell 422, outboard bead seat 424A, and inboard bead seat 424B, rim 452, exterior surface 454, and interior surface 456, which may be configured individually and in relation to each other in the same manner as that discussed for the like-named components of wheel 300 (FIG. 4). Wheel 400 may be configured to be rotatably carried on axle 418. For example, wheel 400 may be rotatably carried on axle 418 by wheel hub 421. In turn, wheel 400 may impart motion to a vehicle including or mounted on the wheel and brake assembly 415. In the example shown in FIG. 5, inboard tubewell 420 and outboard tubewell 422 are mechanically coupled by lug bolt 426 and lug nut 428. Other connection techniques may be used in other examples.

Braking assembly 458 includes an actuator assembly 414 and a brake stack 416. Actuator assembly 414 includes actuator housing 430 (also referred to as brake piston housing 430), actuator housing bolt 432, and piston 434. Brake stack 416 includes a plurality of brake discs, which include interleaved rotor brake discs 436 and stator brake discs 438. Rotor brake discs 436 are configured to move relative to stator brake discs 438, e.g., rotationally about axis A and axially along axis A relative to stator brake discs 438. Rotor brake discs 436 engage with wheel 400, and in particular inboard tubewell 420, by key bosses 440. Stator brake discs 438 are mounted to torque tube 442 by splines 444. Wheel and brake assembly 415 may support any variety of private, commercial, or military aircraft or other type of vehicle.

Wheel and brake assembly 415 may be mounted to a vehicle via axle 418. Torque tube 442 supports actuator assembly 414 and stator brake discs 438. Axle 418 may be mounted on a strut of a landing gear (not shown) or other suitable component of the vehicle to connect wheel and braking assembly 415 to the vehicle.

During operation of the vehicle, braking may be necessary from time to time, such as during landing and taxiing procedures of an aircraft. Wheel and brake assembly 415 is configured to provide a braking function to the vehicle via actuator assembly 414 and brake stack 416. Actuator assembly 414 includes actuator housing 430 and piston 434. Actuator assembly 414 may include different types of actuators such as one or more of, e.g., an electrical-mechanical actuator, a hydraulic actuator, a pneumatic actuator, or the like. During operation, piston 434 may extend away from actuator housing 430 to axially compress brake stack 416 against compression region 448 for braking.

Rotor brake discs 436 are slidably engaged with key bosses 440 for common rotation with inboard tubewell 420 and key bosses 440. Stator brake discs 438 are mounted to torque tube 442 by splines 444. In the example of FIG. 5, brake stack 416 includes four rotors and five stators. However, a different number of rotors and/or stators may be included in brake stack 416 in other examples. Rotor brake discs 436 and stator brake discs 438 may provide opposing friction surfaces for braking an aircraft. In some examples, wheel and brake assembly 415 may include a wheel heat shield 410 between rotor brake discs 436 and inboard tubewell 420 in order to, for example, limit thermal transfer between brake stack 416 and wheel 400.

In some examples, splines 444 may be circumferentially spaced about an outer portion of torque tube 442. Stator brake discs 438 may include a plurality of radially inwardly disposed lug notches along an inner diameter of the brake disc configured to engage with splines 444. Similarly, rotor brake discs 436 may include a plurality of radially inwardly disposed drive slots along an outer periphery (e.g., an outer diameter in the case of a disc having a circular cross-section) of the rotor brake disc. The drive slots may be configured to engage with key bosses 440. As such, rotor brake discs 436 will rotate with the motion of wheel 400 while stator brake discs 438 remain stationary, allowing the friction surfaces of an adjacent stator brake disc 438 and rotor brake disc 436 to engage with one another to decelerate the rotation of wheel 400.

Wheel key caps or wheel assemblies according to the present disclosure may be formed using any suitable techniques. For example, a low thermal conductivity material may be applied as a layer between a wheel key cap and a key boss, or may be formed as a liner and then assembled between a wheel key cap and a key boss. A low thermal conductivity layer may be applied to any suitable component of a wheel assembly, for example, a wheel key cap or a key boss, by one or more of coating, spraying, brushing, dipping, or masking. The low thermal conductivity layer may be applied as a precursor composition that is dried, heated, or cured to form the low thermal conductivity layer. A low thermal conductivity liner may be formed by one or more of molding, casting, forming, machining, or additive manufacturing. The low thermal conductivity liner may be secured to any suitable one or more components of a wheel assembly, for example, a wheel key cap or a key boss, for example, by a fastener or an adhesive. In some examples, low thermal conductivity liner is positioned between two components (e.g., between a wheel key cap and a key boss) and retained in place by compression or friction fit.

The following clauses illustrate example subject matter described herein.

Clause 1: A wheel key cap including: an elongated cap body defining a channel extending along a longitudinal axis, the channel defining a channel surface; and a low thermal conductivity layer over at least a portion of the channel surface, where the elongated cap body is configured to receive a key boss of a wheel in the channel such that the low thermal conductivity layer is between at least a portion of the wheel key cap and the key boss, and where the low thermal conductivity layer has a thermal conductivity less than about 10 W·m⁻¹·K⁻¹.

Clause 2: The wheel key cap of clause 1, where the low thermal conductivity layer includes at least one ceramic.

Clause 3: The wheel key cap of clause 2, where the at least one ceramic includes a porous steatite, a porous zirconia, a porous cordierite, a porous fosterite, a porous anorthite, a porous mullite, a porous yttria silicate, a porous scheelite, or a silica aerogel.

Clause 4: The wheel key cap of clause 3, where the porous zirconia includes a porous yttria-stabilized zirconia.

Clause 5: The wheel key cap of any of clauses 1 to 4, where the channel surface includes a first channel face, a second channel face opposing the first channel face, and a third channel face between the first channel face and the second channel face, where the low thermal conductivity layer includes a coating deposited on at least the first channel face and the second channel face.

Clause 6: The wheel key cap of clause 5, where the third channel face is free of the coating.

Clause 7: The wheel key cap of clause 5, where the coating is deposited on the third channel face.

Clause 8: The wheel key cap of any of clauses 1 to 7, where the low thermal conductivity layer has a thickness that is in a range of 10% to 50% of a thickness of the elongated cap body.

Clause 9: A wheel assembly including: a wheel defining a key boss; and the wheel key cap of any of clauses 1 to 8, where the channel receives the key boss such that the low thermal conductivity layer is between at least the portion of the wheel key cap and the key boss.

Clause 10: The wheel assembly of clause 9, further including an anti-corrosion layer between the key boss and the wheel key cap, where the anti-corrosion layer is between the low thermal conductivity layer and the wheel key cap.

Clause 11: A wheel assembly including: a wheel defining a key boss; and a wheel key cap including an elongated cap body, the elongated cap body defining a channel extending along a longitudinal axis; and a low thermal conductivity liner within the channel and between at least a portion of the wheel key cap and the key boss, where the low thermal conductivity liner has a thermal conductivity less than about 10 W·m-1·K-1.

Clause 12: The wheel assembly of clause 11, where the low thermal conductivity liner includes at least one ceramic.

Clause 13: The wheel assembly of clause 12, where the at least one ceramic includes a porous steatite, a porous zirconia, a porous cordierite, a porous fosterite, a porous anorthite, a porous mullite, a porous yttria silicate, a porous scheelite, or a silica aerogel.

Clause 14: The wheel assembly of clause 13, where the porous zirconia includes a porous yttria-stabilized zirconia.

Clause 15: The wheel assembly of any of clauses 11 to 14, where the channel of the elongated cap body defines a channel surface, where the channel surface includes a first channel face, a second channel face opposing the first channel face, and a third channel face between the first channel face and the second channel face, and where the low thermal conductivity liner includes a first liner portion facing the first channel face and a second liner portion facing the second channel face.

Clause 16: The wheel assembly of clause 15, where the low thermal conductivity liner further includes a third liner portion facing the third channel face.

Clause 17: The wheel assembly of clause 16, where the first liner portion, the second liner portion, and the third liner portion are integral.

Clause 18: The wheel assembly of any of clauses 11 to 17, where the low thermal conductivity liner conforms to the channel of the elongated cap body.

Clause 19: The wheel assembly of any of clauses 11 to 18, where the low thermal conductivity liner has a thickness that is in a range of 10% to 50% of a thickness of the elongated cap body.

Clause 20: The wheel assembly of any of clauses 11 to 19, further including an anti-corrosion layer between the key boss and the wheel key cap, where the anti-corrosion layer is between the low thermal conductivity liner and the wheel key cap

Various examples have been described. These and other examples are within the scope of the following claims.

## Claims

1. A wheel key cap comprising:
an elongated cap body defining a channel extending along a longitudinal axis, the channel defining a channel surface; and
a low thermal conductivity layer over at least a portion of the channel surface,
wherein the elongated cap body is configured to receive a key boss of a wheel in the channel such that the low thermal conductivity layer is between at least a portion of the wheel key cap and the key boss, and
wherein the low thermal conductivity layer has a thermal conductivity less than about 10 W·m⁻¹·K⁻¹.

2. The wheel key cap of claim 1, wherein the low thermal conductivity layer comprises at least one ceramic.

3. The wheel key cap of claim 2, wherein the at least one ceramic comprises a porous steatite, a porous zirconia, a porous cordierite, a porous fosterite, a porous anorthite, a porous mullite, a porous yttria silicate, a porous scheelite, or a silica aerogel.

4. The wheel key cap of any one of claims 1 to 3, wherein the channel surface comprises a first channel face, a second channel face opposing the first channel face, and a third channel face between the first channel face and the second channel face, wherein the low thermal conductivity layer comprises a coating deposited on at least the first channel face and the second channel face.

5. The wheel key cap of any one of claims 1 to 4, wherein the low thermal conductivity layer has a thickness that is in a range of 10% to 50% of a thickness of the elongated cap body.

6. A wheel assembly comprising:
a wheel defining a key boss; and
the wheel key cap of any one of claims 1 to 5, wherein the channel receives the key boss such that the low thermal conductivity layer is between at least the portion of the wheel key cap and the key boss.

7. The wheel assembly of claim 6, further comprising an anti-corrosion layer between the key boss and the wheel key cap, wherein the anti-corrosion layer is between the low thermal conductivity layer and the wheel key cap.

8. A wheel assembly comprising:
a wheel defining a key boss; and
a wheel key cap comprising an elongated cap body, the elongated cap body defining a channel extending along a longitudinal axis; and
a low thermal conductivity liner within the channel and between at least a portion of the wheel key cap and the key boss,
wherein the low thermal conductivity liner has a thermal conductivity less than about 10 W·m⁻¹·K⁻¹.

9. The wheel assembly of claim 8, wherein the low thermal conductivity liner comprises at least one ceramic.

10. The wheel assembly of claim 9, wherein the at least one ceramic comprises a porous steatite, a porous zirconia, a porous cordierite, a porous fosterite, a porous anorthite, a porous mullite, a porous yttria silicate, a porous scheelite, or a silica aerogel.

11. The wheel assembly of any one of claims 8 to 10, wherein the channel of the elongated cap body defines a channel surface,
wherein the channel surface comprises a first channel face, a second channel face opposing the first channel face, and a third channel face between the first channel face and the second channel face, and
wherein the low thermal conductivity liner comprises a first liner portion facing the first channel face and a second liner portion facing the second channel face.

12. The wheel assembly of claim 11, wherein the low thermal conductivity liner further comprises a third liner portion facing the third channel face.

13. The wheel assembly of claim 12, wherein the first liner portion, the second liner portion, and the third liner portion are integral.

14. The wheel assembly of any one of claims 8 to 13, wherein the low thermal conductivity liner has a thickness that is in a range of 10% to 50% of a thickness of the elongated cap body.

15. The wheel assembly of claim 14, further comprising an anti-corrosion layer between the key boss and the wheel key cap, wherein the anti-corrosion layer is between the low thermal conductivity liner and the wheel key cap.
